# EUROPÄISCHE PATENTANMELDUNG

(11) **EP 1 564 104 A1**
(43) Veröffentlichungstag der Anmeldung: **17.08.2005**
(21) Anmeldenummer: 05090022.4
(22) Anmeldetag: 10.02.2005
(51) Int. Cl.: B62B 1/20

(54) **Aufbaukonstruktion für Schubkarren**

(30) Priorität: 14.02.2004 DE 102004007334
(71) Anmelder: Durynek, Reinhard, 48155 Münster (DE); König, André, 48155 Münster (DE)
(72) Erfinder: Durynek, Reinhard, 48155 Münster (DE); König, André, 48155 Münster (DE)
(74) Vertreter: Werner, Anne-Estelle

(57) **Zusammenfassung**

Das Fassungsvermögen gängiger Schubkarrenmodelle ist so ausgelegt, dass sie beladen mit schwerem Gut von einer Person gehandhabt werden können. Für den Transport von leichten Schüttgütern könnte das Fassungsvermögen deutlich größer dimensioniert sein, ohne die Handhabung der Schubkarre (20) zu beeinträchtigen. Die neue Aufbaukonstruktion bzw. Schubkarrenerhöhung (100) aus Gewebe (2), Gestänge(3) und ggf. einer Rückwand (5) umgibt die Schubkarrenwanne (21) vollständig oder zumindest teilweise, wodurch das Fassungsvermögen erheblich vergrößert wird. Sie verfügt über einen gelenkigen Mechanismus im Gestänge (8), über den die Vorderseite der Aufbaukonstruktion (100) absenkbar ist, so dass die Schubkarre (20) wie gewohnt abgekippt werden kann. Aufgrund des großen Fassungsvermögens ist eine Schubkarre (20) mit der neuen Schubkarrenerhöhung für den Transport von leichten Gütern geeignet.

## Beschreibung

Bei der vorliegenden Erfindung handelt es sich um eine Aufbaukonstruktion, die auf herkömmliche Schubkarren montiert werden kann, um das Fassungsvermögen einer Schubkarre zu erhöhen.

Speziell bezieht sich die vorliegende Anwendung auf eine Aufbaukonstruktion für eine Schubkarre, welche die Wände der Schubkarrenwanne erhöht und die Schubkarrenwanne zumindest teilweise umgibt.

Schubkarren werden für den Transport von leichten und schweren Gütern eingesetzt. Ihr Fassungsvermögen ist durch die Größe der Schubkarrenwanne beschränkt. Es ist so bemessen, dass eine mit schweren Gütern beladene Schubkarre mit der Kraft einer Person bewegt werden kann. Wird eine Schubkarre mit leichten Gütern beladen, könnte das Fassungsvermögen deutlich größer ausfallen.

Eine aus DE 81 13 902 U1 bekannte Variante, das Fassungsvermögen einer herkömmlichen Schubkarre mit Hilfe einer Aufbaukonstruktion zu erhöhen, besteht aus einem mit Maschendraht bespannten Rahmen, welcher die Schubkarre vollständig umgibt. Dabei besteht die Front der Aufbaukonstruktion aus einer Klappe, die zum Abkippen der Schuppkarre unten geöffnet werden kann. Dadurch ist die Öffnung zum Entleeren der Schubkarre eingeschränkt. Es handelt sich bei dieser Variante um eine starre Konstruktion, die nicht absenkbar ist.

Bei der in FR 2 774 347 B1 beschriebenen Variante handelt es sich ebenfalls um eine starre Aufbaukonstruktion für Schubkarren mit den bereits genannten Nachteilen in Bezug auf die Entleerung. Auch diese Variante ist nicht absenkbar. Da die Seitenwände der Variante aus FR 2 774 347 B1 aus einzelnen Teilen besteht, erscheint die Montage wenig anwenderfreundlich zu sein. Die Verwendung von Drahtgeflecht als Seitenwände erscheint nachteilig, weil das Schüttgut sich leicht in den Maschen wird verfangen können.

Bei der Variante, die in der US 2,768,022 beschrieben ist, wird, wie bei den vorgenannten Varianten, eine mit Drahtgeflecht bespannte Rahmenkonstruktion verwendet, die nicht absenkbar ist. Sie weißt die gleichen Nachteile auf wie die bereits genannten Varianten. Zur Befestigung dieser Aufbaukonstruktion ist es notwenig, die Schubkarrenwanne mit Bohrungen zu versehen und sie somit baulich zu verändern. Die Montage der Aufbaukonstruktion auf eine Schubkarrenwanne erfolgt mit Flügelschrauben; die Montage erscheint wenig anwenderfreundlich. Zum Entleeren der Schubkarre wird die Klappe an der Vorderseite der Schubkarrenwanne entriegelt und die Schubkarre wird abgekippt. Dabei bleibt die Klappe oben an den Seitenwänden eingehängt. Beim Abkippen der Schubkarre hängt die Klappe senkrecht nach unten, so dass die Öffnung zum Abkippen eingeschränkt ist.

Eine weitere Variante, das Fassungsvermögen einer herkömmlichen Schubkarre mit Hilfe einer Aufbaukonstruktion zu erhöhen, ist in der EP 0 579 316 A1 beschrieben und besteht aus einem Blech, welches die Schubkarre an der Rückseite und an den Seiten umgibt. Dabei laufen die Seitenflanken der Aufbaukonstruktion nach vorne hin aus. Die Schubkarre lässt sich wie gewohnt abkippen. Diese Aufbaukonstruktion erhöht das Fassungsvermögen einer Schubkarre nur relativ gering. Zudem wird mehr Gewicht auf die Handgriffe verlagert.

Weitere Varianten werden in GB 2 201 380 A und FR 2 574 360 A beschrieben. Beide Varianten erweisen sich als nachteilig, weil entweder das Fassungsvermögen einer Schubkarre durch die Erfindung nur unwesentlich vergrößert wird oder weil die Schubkarre mit Aufbaukonstruktion nur erschwert entleerbar ist.

Andere Varianten bestehen aus Einzellösungen, bei denen die Erhöhung der Schubkarrenwände mit Hilfe von Brettern oder Netzen oder Drahtgeflecht in Eigenarbeit für die jeweilige Schubkarrengröße hergestellt werden.

Vor diesem Hintergrund besteht die Aufgabe der Erfindung darin, eine Aufbaukonstruktion für Schubkarren zur Verfügung zu stellen, die leicht entleerbar ist.

Gelöst wird diese Aufgabe durch eine Aufbaukonstruktion gemäß Anspruch 1. Vorteilhafte Ausgestaltungen finden sich in den Unteransprüchen.

Die vorliegende Erfindung kann auf gängige Schubkarrenmodelle montiert werden; sie umgibt die Schubkarrenwanne zumindest teilweise, vorzugsweise vollständig und ist an der Stirnseite absenkbar, so dass das Ladegut über die Schütte abgekippt werden kann.

Mit dieser Aufbaukonstruktion wird das Fassungsvermögen einer herkömmlichen Schubkarre deutlich erhöht, vorzugsweise ohne bauliche Veränderungen an der Schubkarre vornehmen zu müssen.

Die Erfindung soll anhand der Zeichnung näher erläutert werden. Dazu zeigen
- Figur 1: eine perspektivische Ansicht einer Schubkarre mit einer ersten Ausführungsform der erfindungsgemäßen Aufbaukonstruktion im hochgestellten Zustand;
- Figur 2: den Zuschnitt des Gewebes der Aufbaukonstruktion aus Figur 1 mit einer ersten Ausführungsform der erfindungsgemäßen Aufbaukonstruktion;
- Figur 3: die Rückwand der Aufbaukonstruktion aus Figur 1 mit einer ersten Ausführungsform der erfindungsgemäßen Aufbaukonstruktion;
- Figur 4: das Gestänge der Aufbaukonstruktion aus Figur 1 mit einer ersten Ausführungsform der erfindungsgemäßen Aufbaukonstruktion;
- Figur 5: eine Ansicht von vorne oben einer Schubkarre mit der ersten Ausführungsform der erfindungsgemäßen Aufbaukonstruktion im hochgestellten Zustand;
- Figur 6: eine perspektivische Ansicht einer Schubkarre mit der ersten Ausführungsform der erfindungsgemäßen Aufbaukonstruktion im abgesenkten Zustand;
- Figur 7: eine perspektivische Ansicht einer Schubkarre mit einer zweiten Ausführungsform der erfindungsgemäßen Aufbaukonstruktion im hochgestellten Zustand;
- Figur 8: den Zuschnitt des Gewebes der Aufbaukonstruktion aus Figur 7 mit einer zweiten Ausführungsform der erfindungsgemäßen Aufbaukonstruktion; und
- Figur 9: eine Ansicht von vorne oben einer Schubkarre mit der zweiten Ausführungsform der erfindungsgemäßen Aufbaukonstruktion im hochgestellten Zustand.

Mit Vorder- oder Stirnseite einer Schubkarre ist im Folgenden die Seite einer Schubkarre gemeint, von der das Schüttgut ausgekippt wird. Mit Hinter- oder Rückseite einer Schubkarre ist im Folgenden die Seite einer Schubkarre gemeint, an der sich die Handgriffe befinden.

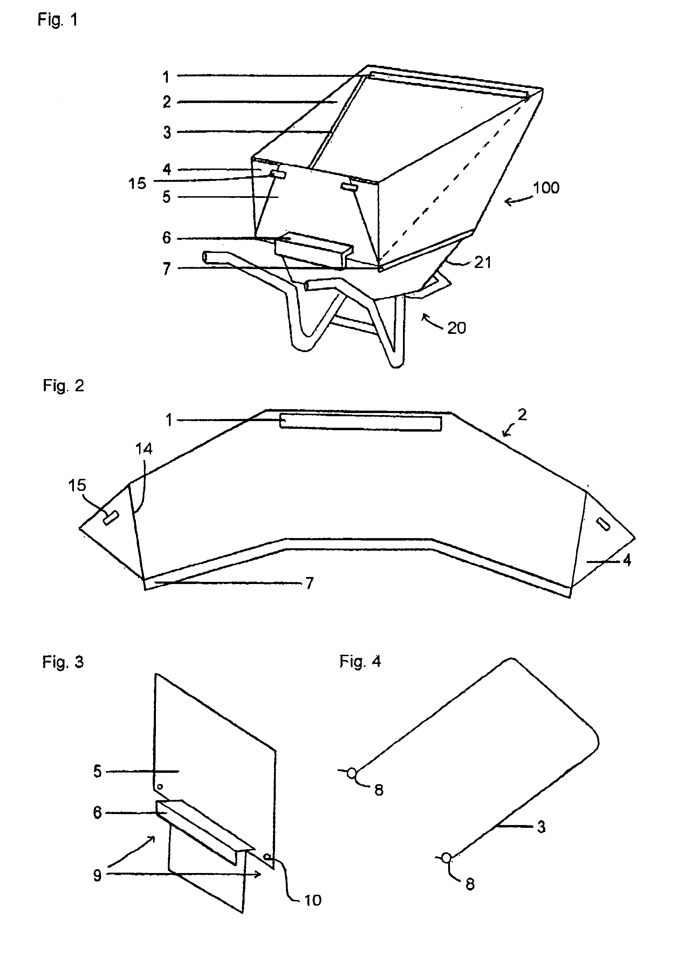

Eine erste bevorzugte Ausführungsform der erfindungsgemäßen Aufbaukonstruktion 100 ist in Figur 1 dargestellt. Sie besteht aus einer starren Rückwand 5 und einem stabilen Gewebe 2, welche zusammen die Schubkarrenwanne 21 vollstandig umgeben. Ein mehrteiliges Gestänge 3 bildet das tragende Gerüst der Aufbaukonstruktion 100. Das Gestänge kann auch einteilig ausgebildet sein.

Wie in Figur 3 dargestellt, hat die Rückwand 5 eine rechteckige Grundform mit Aussparungen 9 an der unteren linken und rechten Ecke, so dass die Rückwand 5 in die Schubkarrenwanne 21 ragt und auf den beiden seitlichen Wannenwülsten aufliegt. Auf Höhe der Aussparungen 9 wird quer auf der Rückwand 5 ein U-Profil 6 mit Öffnung nach unten montiert. Alternativ kann dort auch ein Klemmmechanismus oder eine Verschraubung angebracht werden. Als Befestigungspunkte für das Gestänge 3 dienen zwei Bohrungen 10, die in der Rückwand 5 oberhalb der Aussparungen 9 an den Seiten platziert werden. Alternativ kann das Gestänge auch mit einem gelenkigen Mechanismus auf oder seitlich an der Rückwand oder direkt an der Schubkarrenwanne platziert werden. Die Rückwand besteht vorzugsweise aus einem ausreichend stabilen Material, wie Holz, Metall, Kunststoff oder einer Kombination aus diesen.

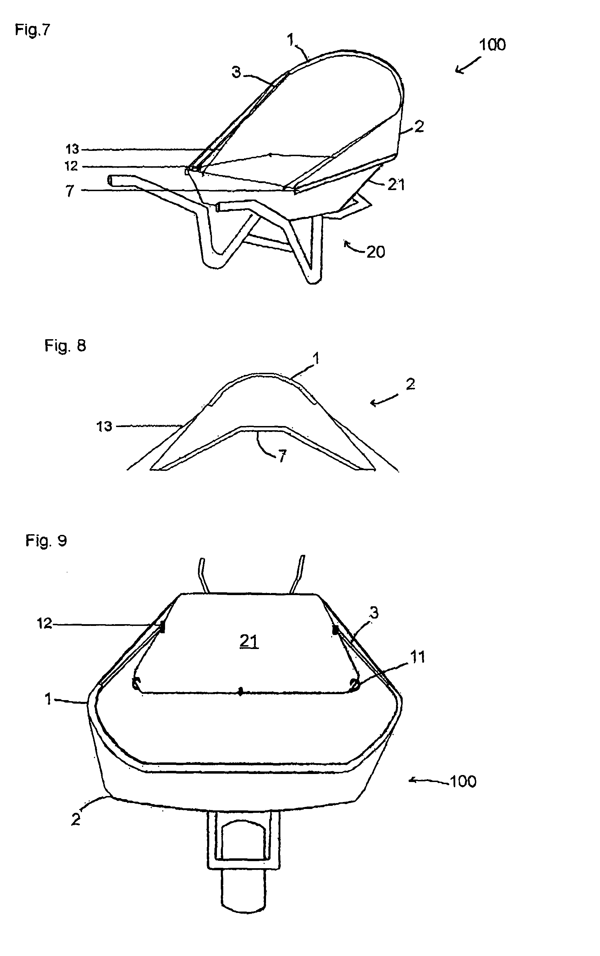

Der Zuschnitt des Gewebes 2 ist in Figur 2 dargestellt. An der unteren Längsseite des Gewebes 2 verläuft ein Tunnel 7, durch den ein elastischer Gummizug gezogen ist. An der oberen Längsseite des Gewebes 2 verläuft an der Vorderseite ein weiterer Tunnel 1, durch den das Gestänge 3 geführt wird. Die Seitenenden 14 des Gewebes 2 werden an der Rückwand 5 fixiert. An den Seitenenden 14 des Gewebes 2 ist überzähliger Stoff in Form von zwei Dreiecken 4 angefugt. Diese sind in aufrechter Position der Aufbaukonstruktion 100 eingefaltet an der Rückwand 5 fixiert (siehe Figur 1) und werden zum Absenken der Aufbaukonstruktion 100 von der Rückwand 5 gelöst (siehe Figur 6). Das Gewebe 2 sollte vorteilhafterweise eine ausreichende Festigkeit aufweisen und vorteilhafterweise aus Kunst- oder Naturfaser oder einer Kombination aus Kunst- und Naturfaser bestehen.

Das Gestänge 3 bildet das tragende Gerüst für das Gewebe 2. Es besteht im hier dargestellten Beispiel aus drei ca. 4 mm starken Stangen, die beiden seitlichen Stangen sind ca. 110 cm und die mittlere ist ca. 80 cm lang. Das Gestänge kann auch aus einer oder mehreren Stangen bestehen, wobei deren Stärke und Länge passend für die jeweilige Ausführung der Aufbaukonstruktion gewählt werden können. Die Stangen sind über winklige Steckaufsätze miteinander verbunden und bilden zusammen eine U-Form, wie auch in Figur 4 dargestellt. An den Enden der beiden seitlichen Stangen befindet sich jeweils ein gelenkiger Mechanismus 8, über welchen das Gestänge 3 beweglich mit der Rückwand 5 verbunden ist. Vorzugsweise sollten die Stangen aus einem biegsamen Material bestehen, wie z.B. Karbon oder Fiberglas. Weitere bevorzugte Materialien sind Metall, Verbundwerkstoff, Kunststoff, Holz oder Kombinationen aus den vorgenannten Materialien.

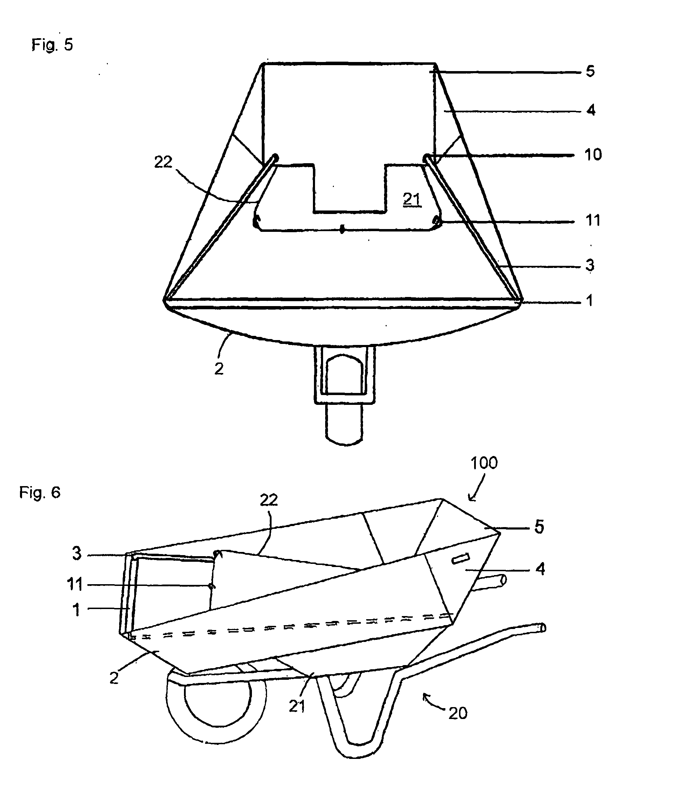

Zur Montage der Rückwand 5 an der Schubkarrenwanne 21 wird das U-Profil 6 über die Wannenwulst gehängt, wobei die Rückwand 5 in den Laderaum der Schubkarrenwanne 21 ragt. Das U-Profil 6 wird mit einem Klemmmechanismus an der Schubkarrenwannenwulst fixiert. Weitere bevorzugte Befestigungsmöglichkeiten sind das Verschrauben, das Verspannen oder eine Kombination von genannten Befestigungsmöglichkeiten. Der untere Tunnelzug 7 wird unterhalb der Schubkarrenwannenwulst verlegt und durch einen elastischen Gummizug gespannt. Um einem Abrutschen des Gewebes 2 an der Stirnseite der Schubkarrenwanne 21 vorzubeugen, wird an der vorderen Seite der Aufbaukonstruktion 100 der untere Tunnelzug 7 mit Hilfe von S-förmigen Haken 11 an der Schubkarrenwannenwulst 22 gehalten, wie in den Figuren 5 und 6 zu sehen ist. Insgesamt sind bevorzugte Möglichkeiten für das Befestigen der unteren Längsseite des Gewebes 2 an der Schubkarrenwanne 21 Ösen und Haken, ein Tunnelzug mit eingezogener Gummikordel, Klemmung, ein umgedrehtes U-Profil oder eine Kombination aus diesen.

Das Gestänge 3 wird, nachdem es in den oberen Tunnelzug 1 eingeführt wurde, in die Befestigungsbohrungen 10 in der Rückwand 5 geschoben. Bei aufrechter Position der Schubkarrenerhöhung bzw. Aufbaukonstruktion 100 verläuft das Gestänge 3 von der Rückwand 5 aus diagonal nach oben zum oberen Tunnelzug 1 (siehe Figur 1).

In aufrechter Position der Aufbaukonstruktion 100 liegt der überzählige Stoff 4 eingefaltet an der Rückwand 5 an und ist z.B. mit Klettverschlüssen 15, Druckknöpfen, Spannriemen, einem Spanngurt oder einem Gummizug befestigt. Löst man die Fixierung von der Rückwand 5, so entfaltet sich der überzählige Stoff 4 und die Aufbaukonstruktion 100 senkt sich an der Vorderseite ab (siehe Figur 6). Das vorzugsweise biegsame Gestänge biegt sich zur Seite und die Schubkarre 20 kann wie gewohnt abgekippt werden. Nach dem Abkippen wird der überzählige Stoff 4 wieder angezogen und eingefaltet an der Rückwand 5 fixiert. Dabei richtet sich die Schubkarrenerhöhung 100 wieder auf und die Schubkarre 20 kann von neuem beladen werden.

In einer weiteren bevorzugten Ausführungsform hat die Rückwand 5 eine rechteckige Grundform mit einem auf Höhe des unteren Drittels horizontal auf der Rückwand montierten U-Profil mit Öffnung nach unten. An der oberen Kante der Rückwand befinden sich rechts und links zwei Halterungen, die aus Ösen oder Haken oder Bohrungen bestehen. Zur Montage der Rückwand an der Schubkarrenwanne wird das U-Profil Ober die Wannenwulst gehängt, wobei die Rückwand außerhalb des Laderaums der Schubkarrenwanne hängt. Zur Fixierung der Rückwand werden die Halterungen mit den Handgriffen der Schubkarre verspannt.

Eine weitere bevorzugte Ausführungsform der erfindungsgemäßen Aufbaukonstruktion 100 ist in den Figuren 7 bis 8 dargestellt. Diese Ausführungsform unterscheidet sich von der bereits diskutierten Ausführungsform dahingehend, dass einerseits auf die Rückwand verzichtet wurde und andererseits ein im wesentlichen bogenförmiges Gestänge 3 verwendet wird.

Der Absenkmechanismus, wie in den obigen Varianten dargestellt, kann dahingehend modifiziert werden, dass der gelenkige Mechanismus weiter von der Rückwand entfernt positioniert wird. Ein Absenken der Aufbaukonstruktion ist auch ohne überzähligen Stoff 4 möglich.

Es sei darauf hingewiesen, dass die Höhe der Rückwand 5 beliebig gewählt werden kann, so dass sich Aufbaukonstruktionen unterschiedlicher Größen ergeben, die für unterschiedliche Nutzergruppen bzw. Anwendungen geeignet sein können. Im Extremfall kann, wie in den Figuren 7 bis 9 gezeigt, auf die Rückwand ganz verzichtet werden. Zwar ist dadurch die Volumenvergrößerung der Schubkarre 20 geringer. Die dadurch erreichte Volumenvergrößerung eignet sich vor allem für die Anwendung in kleineren bis mittleren Gärten. Aber Ausführungsformen ohne Rückwand haben den Vorteil, dass sie im abgebauten Zustand besonders Platz sparend zusammengefaltet werden können, da sie hauptsächlich aus Gestänge 3 und Gewebe 2 bestehen. Außerdem wird durch Verzicht auf die Rückwand das Gewicht solcher Aufbaukonstruktionen wesentlich verringert. Auch die Material- und Herstellungskosten sind dadurch geringer. Vorteilhaft an dieser Variante sind das geringe Packmaß im abgebauten Zustand, das geringe Gewicht der Aufbaukonstruktion sowie geringere Material- und Herstellungskosten.

Im Hinblick auf ein Platz sparendes Zusammenfalten der erfindungsgemäßen Aufbaukonstruktion ist es vorteilhaft, das Gestänge 3 mehrteilig vorzusehen. Im Falle von Aufbaukonstruktionen mit Rückwand hat es sich diesbezüglich als vorteilhaft erwiesen, die Rückwand faltbar auszugestalten. Beispielsweise können einzelne Rückwandteile über ein oder mehr Scharniere verbunden sein.

Wie in den Figuren 7 bis 9 zu sehen, kann das Gestänge 3 im mittleren Abschnitt im wesentlichen bogenförmig sein. Entsprechend angepasst sind auch der Zuschnitt des Gewebes 2 und der Verlauf des oberen Tunnels 1 (siehe Figur 8). Dies hat insbesondere den Vorteil, dass die auf den Tunnel 1 wirkende Belastung gleichmäßiger verteilt wird.

Bei Verzicht auf eine Rückwand wird das Gewebe 2 bevorzugt derart zugeschnitten, dass es zur Rückseite der Schubkarre 20 hin keilförmig ausläuft. Das Gestänge 3 ist nunmehr an der Oberkante der Schubkarrenwanne 21 über einen Klemmmechanismus 12 befestigt, der schwenkbar angelenkt ist. Im aufgestellten Zustand (siehe Figur 8) wird die Aufbaukonstruktion 100 mit Hilfe von Schnüre 3 gespannt, die einerseits am Gewebe 2 oder am Gestänge 3 befestigt sein können und andererseits an der Rückwand der Schubkarre 20 (siehe Figur 7) oder auch ihren Griffen befestigt sind. Um die Aufbaukonstruktion 100 zum Entladen nach vorne abzusenken, werden die Schnüre 13 gelöst, so dass das Gestänge 3 mit Gewebe 2 je nach Abmessungen auf den Schubkarrenwannenrand oder außen daran vorbei fällt.

Die erfindungsgemäße Aufbaukonstruktion führt zu einer erheblichen Kapazitätssteigerung von handelsüblichen Schubkarren. Die Schubkarrenerhöhung eignet sich für leichte Transportgüter, wie z.B. Laub oder Rasenschnitt. Sie kann in allen Bereichen angewendet werden, in denen größere Mengen von leichten Gütern von Hand transportiert werden müssen, wie z.B. in Gartenbaubetrieben oder Hausmeistereien, auf Friedhöfen oder in Privatgärten. Aufgrund der Kapazitätssteigerung wird die Anzahl der Transportwege reduziert, was eine deutliche Arbeits- und Zeitersparnis mit sich bringt. Das geringe Gewicht des Transportguts führt zu einer unerheblichen körperlichen Mehrbelastung. Die Schubkarrenerhöhung kann auf die gängigen Schubkarrenmodelle, vorzugsweise auf solche mit einer Wannenwulst, montiert werden.

Der einfache Auf- und Abbau der Schubkarrenerhöhung, die deutliche Erhöhung des Fassungsvermögens und die weiterhin uneingeschränkte Entleerung ermöglichen eine deutliche Verringerung des Arbeits- und Zeitaufwandes beim Transport von leichten Schüttgütern. Die absenkbare Schubkarrenerhöhung kann sowohl in Gewerbebetrieben als auch von Privatpersonen angewendet werden.

## Patentansprüche

1. Aufbaukonstruktion für eine Schubkarre, welche die Wände der Schubkarrenwanne erhöht und die Schubkarrenwanne zumindest teilweise umgibt, **dadurch gekennzeichnet, dass** die Vorderseite der Aufbaukonstruktion (100) absenkbar ist, so dass das ursprüngliche Fassungsvermögen der Schubkarre (20) vergrößert wird und die Schubkarre (20) über ihre Vorderseite entleert werden kann.

2. Aufbaukonstruktion nach Anspruch 1, **dadurch gekennzeichnet, dass** sie derart ausgebildet ist, dass sie die Schubkarrenwanne (21) vollständig umgibt.

3. Aufbaukonstruktion nach Anspruch 1 oder 2, **dadurch gekennzeichnet, dass** sie an der Schubkarrenwanne befestigbar ist, ohne bauliche Veränderungen an der Schubkarre vornehmen zu müssen.

4. Aufbaukonstruktion nach einem der Ansprüche 1 bis 3, **dadurch gekennzeichnet, dass** sie hauptsächlich aus einer plattenförmigen starren Rückwand (5), einem robusten Gewebe (2) und einem Gestänge (3) besteht.

5. Aufbaukonstruktion nach Anspruch 4, **dadurch gekennzeichnet, dass** die Rückwand (5) eine ausreichende Festigkeit aufweist und aus Holz, Metall, Kunststoff oder einer Kombination aus diesen besteht.

6. Aufbaukonstruktion nach Anspruch 4 oder 5, **dadurch gekennzeichnet, dass** die Rückwand (5) durch Klemmung, Verschraubung, Verspannung oder einer Kombination aus diesen an der Schubkarre befestigt ist, so dass die Rückwand (5) in einer aufrechten Position gehalten wird.

7. Aufbaukonstruktion einem der Ansprüche 4 bis 6, **dadurch gekennzeichnet, dass** das Gewebe (2) eine ausreichende Festigkeit aufweist und aus Kunstfasern, Naturfasern odereiner Kombination aus diesen besteht.

8. Aufbaukonstruktion nach einem der Ansprüche 4 bis 7, **dadurch gekennzeichnet, dass** die untere Längsseite des Gewebes (2) die Schubkarrenwanne (21) vollständig umgibt und an ihr anliegt und durch Ösen und Haken (11), einen Tunnelzug (7) mit eingezogener Gummikordel, Klemmung, ein umgedrehtes U-Profil (6) oder eine Kombination aus diesen an der Schubkarrenwanne (21) befestigt ist.

9. Aufbaukonstruktion nach einem der Ansprüche 4 bis 8, **dadurch gekennzeichnet, dass** das Gewebe (2) durch ein Gestänge (3) in einer aufrechten Position gehalten wird.

10. Aufbaukonstruktion nach einem der Ansprüche 4 bis 9, **dadurch gekennzeichnet, dass** das Gestänge (3) das tragende Gerüst der Aufbaukonstruktion (100) bildet und einteilig oder mehrteilig, durch Steckaufsätze verbunden, ist.

11. Aufbaukonstruktion nach einem der Ansprüche 4 bis 10, **dadurch gekennzeichnet, dass** besagtes Gestänge (3) aus Fiberglas, Karbon, Metall, Verbundwerkstoff, Kunststoff, Holz oder einer Kombination aus diesen besteht.

12. Aufbaukonstruktion nach einem der Ansprüche 4 bis 11, **dadurch gekennzeichnet, dass** sie über einen gelenkigen Mechanismus (8, 12) im Gestänge (3) verfügt, so dass die Aufbaukonstruktion (100) an der Vorderseite absenkbar ist.
